# EUROPÄISCHE PATENTANMELDUNG

(11) **EP 2 765 015 A2**
(43) Veröffentlichungstag der Anmeldung: **13.08.2014**
(21) Anmeldenummer: 14153760.5
(22) Anmeldetag: 04.02.2014
(51) Int. Cl.: B60J 1/18, B60J 7/12, B60J 7/10, B60J 10/10

(54) **Softtop mit fester Heckscheibe**

(30) Priorität: 07.02.2013 DE 202013100558 U
(71) Anmelder: Blau, Mirko, 42111 Wuppertal (DE); Klein, Maximilian, 35394 Gießen (DE)
(72) Erfinder: Blau, Mirko, 42111 Wuppertal (DE); Klein, Maximilian, 35394 Gießen (DE)
(74) Vertreter: Raffay & Fleck

(57) **Zusammenfassung**

Die vorliegende Anmeldung betrifft ein Softtop für Kraftfahrzeuge mit einer Vorrichtung zur auswechselbaren Einbringung einer Scheibe sowie ein solches Softtop mit einer Scheibe.

Bekannte Softtops weisen jedoch den Nachteil auf, dass die Scheiben nicht auswechselbar sind. Ist eine Scheibe defekt oder beschädigt, ist das gesamte Softtop zu tauschen bzw. in einem aufwendigen Prozess die Scheibe zu erneuern. Dies rührt daher, dass die Scheibe üblicherweise fest mit dem Softtop verbunden ist und sich ein Ablösen der Scheibe zumindest schwierig darstellt, wenn nicht sogar unmöglich ist oder eine Beschädigung des verbleibenden Softtops bewirkt.

Gelöst wird die Aufgabe durch ein Softtop mit einer Vorrichtung zur auswechselbaren Einbringung einer Scheibe (5) in ein flexibles Dachelement (1) aufweisend einen Scheibenaufnahmespalt. Dabei ist das Dachelement in einem dem Scheibenaufnahmespalt zugewandten Endabschnitt zum Scheibenaufnahmespalt hin umgeschlagen. Dadurch wird eine Tasche des Dachelementes gebildet, in der ein Einlegelement (3) vorgesehen ist. Darüber hinaus ist ein Halteelement (4) vorgesehen, das sich auf einer ersten Seite des Scheibenaufnahmespaltes zwischen einer von der Scheibenaufnahme abgewandten Seite des Einlegeelementes (3) und dem Dachelement (1) und auf einer zweiten, der ersten Seite gegenüberliegenden Seite des Scheibenaufnahmespaltes erstreckt.

## Beschreibung

Die vorliegende Anmeldung betrifft ein Softtop für Kraftfahrzeuge mit einer Vorrichtung zur auswechselbaren Einbringung einer Scheibe sowie ein solches Softtop mit einer Scheibe.

Ein solches Softtop ist beispielsweise bekannt aus der DE 202 07 069 U1.

Bekannte Softtops weisen jedoch den Nachteil auf, dass die Scheiben nicht auswechselbar sind. Ist eine Scheibe defekt oder beschädigt, ist das gesamte Softtop zu tauschen bzw. in einem aufwendigen Prozess die Scheibe zu erneuern. Dies rührt daher, dass die Scheibe üblicherweise fest mit dem Softtop verbunden ist und sich ein Ablösen der Scheibe zumindest schwierig darstellt, wenn nicht sogar unmöglich ist oder eine Beschädigung des verbleibenden Softtops bewirkt.

Gelöst wird die Aufgabe durch ein Softtop gemäß Anspruch 1 und/oder durch einem Verfahren nach einem der Ansprüche 14 oder 15. Die Ansprüche 1 bis 13 geben vorteilhafte Weiterbildungen an.

Gemäß Anspruch 1 beinhaltet ein Softtop mit einer Vorrichtung zur auswechselbaren Einbringung einer Scheibe ein flexibles Dachelement aufweisend einen Scheibenaufnahmespalt. Dabei ist das Dachelement in einem dem Scheibenaufnahmespalt zugewandten Endabschnitt zum Scheibenaufnahmespalt hin umgeschlagen. Dadurch wird eine Tasche des Dachelementes gebildet, in der ein Einlegelement vorgesehen ist. Darüber hinaus ist ein Halteelement vorgesehen, das sich auf einer ersten Seite des Scheibenaufnahmespaltes zwischen einer von der Scheibenaufnahme abgewandten Seite des Einlegeelementes und dem Dachelement und auf einer zweiten, der ersten Seite gegenüberliegenden Seite des Scheibenaufnahmespaltes erstreckt.

Erfindungsgemäß ist somit das Dachelement umgeschlagen und in dieser Tasche ein Einlegeelement vorgesehen. Auch greift das Halteelement in diese Tasche ein. Das Halteelement erstreckt sich darüber hinaus auf die gegenüberliegende Seite des Scheibenaufnahmespaltes. Dabei kann es den Scheibenaufnahmespalt auch begrenzen bzw. auf dieser zweiten Seite den Scheibenaufnahmespalt bilden.

Das Halteelement kann somit den Scheibenaufnahmespalt umspannen, insbesondere kann es auf drei Seiten des Scheibenaufnahmespaltes angeordnet sein bzw. eine bis zwei Seiten des Scheibenaufnahmespaltes bilden. Der Scheibenaufnahmespalt ist in der Regel von einer Seite her geöffnet und von drei Seiten her geschlossen. In diesen Scheibenaufnahmespalt kann eine Scheibe eingesetzt sein.

Durch eine solche Vorkehrung kann die Scheibe einfach ausgewechselt werden, ohne dass Dichtigkeitsprobleme zu befürchten sind. Durch das Umlegen des Dachelementes und das Vorsehen des Einlegeelementes sowie das Eingreifen des Halteelementes in die Tasche und die Erstreckung des Halteelementes auf die zweite Seite des Scheibenaufnahmespaltes ist eine ausreichende Dichtung gewährleistet. Dies hindert jedoch nicht daran, die Dichtigkeit durch Vorsehen weiterer Dichtelemente zu verbessern bzw. durch das Vorsehen solcher weiterer Dichtelemente oder anderer Elemente eine lang anhaltende ansprechende Optik zu gewährleisten.

Mit Vorteil ist das Halteelement so ausgebildet, dass es eine Klemmwirkung zwischen der ersten und der zweiten Seite des Scheibenaufnahmespaltes auf eine eingesetzte Scheibe ausüben kann. Ein solches Halteelement bewirkt somit eine Kraft auf die Flächen einer eingesetzten Scheibe. Die Eignung des Halteelementes ergibt sich zum einen aus der Materialauswahl und zum anderen vorteilhafter Weise auch dadurch, dass die Dimensionierung des Halteelementes auf die einzusetzende oder eingesetzte Scheibe abgestimmt ist bzw. wird. Es ist insbesondere eine Abstimmung auf standardisierte Scheiben zu bevorzugen.

Durch die Klemmwirkung wird die Scheibe sicher gehalten und die Dichtigkeit verbessert. Dabei sollte die Klemmwirkung so ausgebildet sein, dass trotz dieser Klemmwirkung eine beschädigungsfreie Auswechslung der Scheibe möglich ist.

Mit besonderem Vorteil ist das Halteelement einteilig ausgeführt. Dies erhöht die Dichtigkeit und vereinfacht eine Aufbringung der entsprechenden Klemmwirkung.

Mit besonderem Vorteil ist das Halteelement aus einem flexiblen Material, insbesondere einem Thermoplast, wie PVC, oder einem Elastomer, ausgeführt. Dieses Element kann auch mit einer innen liegenden Seele, wie z.B. eine Metalleinlage, verstärkt sein.

Mit besonderem Vorteil ist der Scheibenaufnahmespalt umlaufend geschlossen ausgebildet. Dies bedeutet, dass der Scheibenaufnahmespalt beispielsweise eine Scheibe vollständig aufnehmen kann, so dass ihr umlaufender Rand in dem Scheibenaufnahmespalt zu liegen kommt und der Scheibeaufnahmespalt über diesen Umfang nicht unterbrochen ist.

Mit besonderem Vorteil ist auch das Halteelement entsprechend umlaufend geschlossen und entsprechend einteilig ausgebildet. Auch das Einlegeelement ist vorteilhafter Weise entsprechend umlaufend ausgebildet und dabei einteilig ausgeführt.

Auch ist es vorteilhaft, wenn das flexible Dachelement eine entsprechende Aussparung mit umlaufendem Rand aufweist und im Bereich des Randes einteilig ausgeführt ist. So kann die Vorrichtung zur auswechselbaren Einbringung einer Scheibe mit besonders guter Dichtigkeit mit dem flexiblen Dachelement verbunden sein. Somit weist das flexible Dachelement vorteilhafter Weise eine entsprechende Aussparung auf, die es nach Umlegen des flexiblen Dachelementes und Anbringen der Vorrichtung zur auswechselbaren Einbringung einer Scheibe erlaubt, die Scheibe in diese Aussparung in die Vorrichtung einzusetzen.

Werden weitere Elemente, insbesondere Dichtelemente verwendet, so sind diese vorteilhafter Weise ebenfalls umlaufend geschlossen und einteilig ausgeführt.

Mit weiterem Vorteil ist der Scheibenaufnahmespalt in seinem umlaufenden Umfang und/oder seiner Breite im Verhältnis zur einzusetzenden bzw. eingesetzten Scheibe so ausgebildet, dass er ein Untermaß aufweist, insbesondere von 0,5% bis 2%. Dadurch kann die Dichtigkeit und die Festigkeit der Aufnahme der Scheibe weiter erhöht werden.

Mit besonderem Vorteil weist das Halteelement eine Verbindungsvorrichtung zum Verbinden mit einem Himmel auf. Dies ist ein besonderer Vorteil, der im Stand der Technik jedenfalls nicht realisierbar ist. Bei bekannten Softtops ist das Anbringen eines Himmel nicht oder nur sehr schwierig möglich. Erfindungsgemäß kann das Halteelement somit eine Verbindungsvorrichtung aufweisen, die es ermöglicht, auf einfache Weise einen Himmel mit dem Halteelement zu verbinden und somit optisch ansprechend im Softtop vorzusehen. Der Himmel ist dabei vorteilhafter Weise aus einem flexiblen Material, insbesondere textilem Material, gebildet.

Mit besonderem Vorteil ist die Verbindungsvorrichtung zur Vernähung mit dem Himmel ausgebildet. Mit besonderem Vorteil kann das Softtop auch einen mit dieser Verbindungsvorrichtung vernähten Himmel beinhalten.

Mit besonderem Vorteil ist die Verbindungsvorrichtung durch einen lippenförmigen Fortsatz des Halteelements gebildet. Dieser erstreckt sich dabei vorteilhafter Weise in Richtung der Erstreckung der einzusetzenden Scheibe. Durch einen solchen Fortsatz, beispielsweise wenn das Halteelement aus einem elastischen Material gebildet ist, können ein Himmel und/oder andere bzw. ein anderes Verbindungselement(e) oder -leiste(n), wie zum Beispiel Druckköpfe oder ein Reißverschluss einfach mit diesem Fortsatz verbunden, insbesondere vernäht, und damit auf einfache und ansprechende Weise im Softtop befestigt und in ihm beinhaltet sein.

Mit besonderem Vorteil ist das Einlegeelement aus Metall, insbesondere aus Federstahl gebildet. Das Einlegeelement ist mit Vorteil umlaufend ausgebildet und mit Vorteil in der Form seines Umfanges der Form des Umfanges der einzusetzenden bzw. eingesetzten Scheibe entsprechend ausgebildet. Dies bedeutet, dass der äußere Rand des Einlegeelementes bündig mit der Scheibe abschließen kann, wenn das Einlegeelement auf bzw. über der Scheibe positioniert ist.

Mit besonderem Vorteil ist das Einlegeelement flach ausgebildet. Dies bedeutet, dass seine Höhe deutlich geringer ausfällt als seine Erstreckung in andere Richtungen. Das Einlegeelement ist vorteilhafter Weise als umlaufendes Band bzw. so ausgebildet, dass es, wenn es mit den äußeren Kanten der Scheibe in Deckung gebracht ist bzw. wird, einen äußeren Rand, insbesondere von 2 mm bis 2 cm der Scheibe bedeckt.

Mit besonderem Vorteil ist an einer dem Scheibenaufnahmespalt zugewandten Seite der Tasche eine Dichtung vorgesehen. Eine solche Dichtung kann beispielsweise zur Erhöhung der Dichtheit aber auch zur Verbesserung einer lang anhaltenden ansprechenden Optik verwendet werden. Die Dichtung kann vorteilhafter Weise die Begrenzung des Scheibenaufnahmespaltes in eine oder zwei Richtungen bilden.

Mit besonderem Vorteil erstreckt sich die Dichtung dabei zumindest in den Bereich der Umbiegung des Dachelementes. Dadurch kann eine sich an der Umbiegung und zwischen dieser und einer eingesetzten Scheibe ergebende Vertiefung oder ein sich ergebener Rücksprung durch die Dichtung verschlossen werden. Dadurch wird eine Ansammlung von Schmutz in diesem Bereich weitgehend verhindert und eine ansprechende Optik auch für längere Zeit unter Witterungseinfluss gewährleistet.

Somit kann die Dichtung beispielsweise als flaches Element ausgebildet werden, das sich im Bereich der Tasche erstreckt und im Bereich der Umbiegung seine Dicke erhöht.

Dichtungen können beispielsweise aus Elastomer, thermoplastischen Elastomer oder einem Gemisch, beispielsweise in Thermoplast eingelagertem und vernetztem Elastomer bestehen.

Mit besonderem Vorteil weist der Scheibenaufnahmespalt ein- oder beidseitig Klebemittel auf. Derartige Klebemittel können zahlreich sein. Beispielsweise kommt doppelseitiges Klebeband hier in Frage. Dadurch kann der Scheibenaufnahmespalt bzw. das oder die ihn begrenzendes/n Element(e) fest mit einer einzusetzenden Scheibe verbunden werden.

Vorteilhafter Weise wird zwischen dem der Scheibenaufnahme zugewandte Teil der Tasche und dem Einlegeelement ebenfalls ein Klebemittel, insbesondere ein doppelseitiges Klebemittel, insbesondere doppelseitiges Klebeband, zur Verbindung des Einlegeelements und des Dachelements vorgesehen.

Mit Vorteil werden des Weiteren bei der Verwendung von weiteren Elementen beidseitig dieser Elemente ebenfalls Klebemittel eingesetzt, so dass diese fest mit den anderen Elementen der Aufnahmevorrichtung verbunden sind. Insbesondere bei der Verwendung einer Dichtung zwischen umgelegtem Dachelement und Scheibenaufnahmespalt wird vorteilhafter Weise zwischen dieser Dichtung und dem umgelegten Dachelement ein Klebemittel, beispielsweise doppelseitiges Klebeband, vorgesehen.

Mit besonderem Vorteil beinhaltet das Softtop mindestens ein Stützelement, insbesondere in Form eines flexiblen Bandes, zum Halten der Scheibe und/oder der Vorrichtung zur auswechselbaren Einbringung. Durch solche Stützelemente kann ein Einsinken der Scheibe reduziert bzw. verhindert werden. Dabei können diese Stützelemente sowohl am flexiblen Dachelement, dem Halteelement als auch dem Einlegeelement oder weiteren verwendeten Elementen angreifen. Eine Vorsehung von Stützelementen ist insbesondere dann vorteilhaft, wenn ein Himmel beinhaltet ist, der diese Stützelemente optisch verbergen kann.

Gelöst wird die Aufgabe auch durch ein Softtop gemäß einem der vorstehenden Ansprüche beinhaltend eine zumindest teilweise transparente Scheibe. Dabei ist die Scheibe in den Scheibenaufnahmespalt eingesetzt. Insbesondere ist das Halteelement so ausgebildet, dass es eine Klemmwirkung auf die Scheibe ausübt. Dabei kann die Klemmwirkung sowohl auf die Scheibenfläche als auch auf den umlaufenden Scheibenrand ausgeübt werden. Dies kann durch Vorsehen eines Untermaßes bzw. der Ausbildung des Halteelementes in Bezug auf die Scheibe bewirkt werden. Insbesondere ist auch ein Himmel beinhaltet, der mit dem Halteelement insbesondere vernäht ist.

Vorteilhafterweise ist die Verbindungsvorrichtung zur Vernähung mit dem Himmel ausgebildet ist. Vorteilhafterweise ist das Einlegeelement aus Metall, insbesondere Federstahl, gebildet ist. Vorteilhafterweise ist das Einlegeelement flach ausgebildet. Vorteilhafterweise ist ein Stützelement, insbesondere in Form eines flexiblen Bandes, zum Halten der Scheibe und/oder der Vorrichtung zur auswechselbaren Einbringung beinhaltet. Vorteilhafterweise übt das Halteelement eine Klemmwirkung auf die Scheibe (5) aus. Vorteilhafterweise weist das Haltelement verglichen mit der Dicke der Scheibe zuzüglich der Dicke der zwischen Halteelement und Scheibe angeordneten Elemente und/oder dem Umfang der Scheibe ein Untermaß auf. Vorteilhafterweise ist ein Himmel beinhaltet und mit dem Halteelement verbunden ist.

Gelöst wird die Aufgabe darüber hinaus durch ein Verfahren zur Verbindung eines flexiblen Dachelementes mit einer Scheibe nach Anspruch 14. Dabei wird diese Verbindung auswechselbar ausgebildet wird. Erfindungsgemäß wird dazu zunächst das flexible Dachelement umgelegt, wodurch eine Tasche entsteht.

Zunächst wird erfindungsgemäß ein flexibles Dachelement mit einer Aussparung oder einem Rand bereitgestellt und das Einlegeelement darauf platziert, insbesondere darauf fixiert, insbesondere mit dazwischen liegendem Klebemittel. Anschließend oder parallel bzw. davor wird vorteilhafter Weise, jedoch nicht notwendiger Weise, auf der Scheibe rundum bzw. den Kanten, die in einen Scheibenaufnahmespalt aufgenommen werden sollen, ein Dicht- bzw. Passungsprofil aufgebracht, insbesondere dort fixiert. Anschließend, parallel oder vorher wird das flexible Dachelement umgestülpt und dadurch eine Tasche erzeugt, in der Das Einlegeelement zu liegen kommt. Anschließend wird die Scheibe, insbesondere mit aufgebrachtem Dicht- bzw. Passungsprofil aufgelegt und vorteilhafter Weise fixiert, beispielsweise durch Klebemittel, beispielsweise doppelseitiges Klebeband oder Klammern. Anschließend wird das Halteelement aufgestülpt, insbesondere übergestülpt und aufgeschlagen.

Gelöst wird die Aufgabe erfindungsgemäß auch nach Anspruch 15 durch ein Auswechseln der Scheibe durch Entfernen des Halteelementes und anschließendes Trennen der Scheibe vom flexiblen Dachelement. Eine neue Scheibe kann dann mit den beschriebenen Verfahrensschritten wieder eingebracht werden, wobei das flexible Dachelement vorteilhafter Weise beim Wechseln nicht vom Einlegeelement getrennt wird, so dass diese Zusammenbringschritte bzw. auch das Umstülpen des flexiblen Dachelementes beim Einsetzen einer neuen Scheibe entfallen können. Vorteilhafter Weise wird beim Auswechseln der Scheibe ein vorteilhafter Weise verwendetes Dicht- bzw. Passungsprofil ebenfalls erneuert. Auch die Klebemittel an den Übergängen der zu erneuernden Elemente werden vorteilhafter Weise erneuert.

Bezüglich der Verfahren lassen sich vorteilhafterweise die bezüglich der Vorrichtung geschilderten Merkmale entsprechend umsetzten oder entsprechend ausgebildete Elemente verwenden.

Weitere Vorteile und beispielhafte Ausführungen sollen anhand der nachfolgenden Zeichnung rein exemplarisch und nicht beschränkend erläutert werden. Dabei zeigt die Figur:

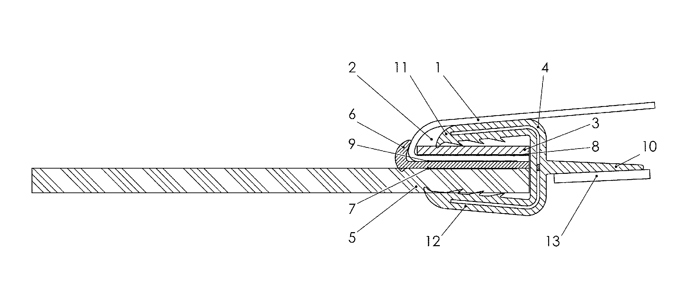

- Fig. 1: einen Querschnitt durch ein Softtop mit Vorrichtung zur auswechselbaren Aufnahme einer Scheibe mit eingesetzter Scheibe.

Fig. 1 zeigt einen Querschnitt durch einen Abschnitt eines Softtops mit eingesetzter Scheibe. Zu erkennen ist ein Abschnitt eines flexiblen Dachelementes 1, das umgelegt ist. Zwischen der Umlegung entsteht ein Taschenhohlraum 2. In diesem Taschenhohlraum 2 ist ein Einlegeelement 3 auf das flexible Dachelement 1 mit Hilfe von doppelseitigem Klebeband 8 aufgebracht. Außerhalb der Tasche bzw. des Taschenhohlraumes 2 ist auf dem flexiblen Dachelement 1 eine Dichtung 6 ebenfalls mit doppelseitigem Klebeband 9 fixiert. Die Dichtung 6 ragt dabei teilweise über die Umlegung des flexiblen Dachelementes 1 hinaus. Dazu weist die Dichtung 6 eine entsprechende Nase auf. Somit bildet die Dichtung 6 an einer Seite die Begrenzung des Scheibenaufnahmespalts. Die Glasscheibe 5 ist in einen in der Aufnahmevorrichtung ausgebildeten Scheibenaufnahmespalt eingesetzt. Sie ist mit der randständigen und umlaufenden Dichtung 6 mit doppelseitigem Klebeband 7 verbunden.

Darüber hinaus zu erkennen ist ein Halteelement 4 mit einem ersten Arm 11 und einem zweiten Arm 12. Der erste Arm 11 ragt in den Taschenhohlraum 2 zwischen flexiblem Element 1 und Einlegeelement 3 hinein. Der zweite Arm 12 bildet auf der anderen Seite die Begrenzung des Scheibenaufnahmespaltes während der zwischen den Armen 11, 12 gelegene Abschnitt den Scheibenaufnahmespalt an einer weiteren Seite ebenfalls begrenzt. Das Halteelement 4 weist darüber hinaus eine Verbindungsvorrichtung 10 zur Verbindung mit einem Himmel auf.

Generell anzumerken ist, dass die Fortsätze des Halteelementes 4 und der Dichtung 6, die in der Zeichnung in andere Elemente hineinragen, tatsächlich nicht in diese Elemente hineinragen. Sie wurden lediglich zum besseren Verständnis derart gezeichnet. Tatsächlich werden sie entsprechend gestaucht oder gebogen und sorgen für eine entsprechende Abdichtung bzw. Ausübung einer Klemmwirkung.

### Bezugzeichenliste

- 1: flexibles Dachelement
- 2: Taschenhohlraum
- 3: Einlegeelement
- 4: Halteelement
- 5: Glasscheibe
- 6: Dichtung
- 7: Doppelseitiges Klebeband
- 8: Doppelseitiges Klebeband
- 9: Doppelseitiges Klebeband
- 10: Verbindungsvorrichtung
- 11: erster Arm
- 12: zweiter Arm

## Patentansprüche

1. Softtop mit Vorrichtung zur auswechselbaren Einbringung einer Scheibe (5) umfassend ein flexibles Dachelement (1) und aufweisend einen Scheibenaufnahmespalt,
wobei das Dachelement (1) in einem dem Scheibenaufnahmespalt zugewandten Endabschnitt zum Scheibenaufnahmespalt hin umgeschlagen ist und
wobei in einer durch das umgeschlagene Dachelement gebildeten Tasche (2) ein Einlegelement (3) vorgesehen ist,
**dadurch gekennzeichnet,**
**dass** ein Halteelement (4) vorgesehen ist, das sich auf einer ersten Seite des Scheibenaufnahmespaltes zwischen einer von der Scheibenaufnahme abgewandten Seite des Einlegeelements (3) und dem Dachelement (1) und auf einer zweiten, der ersten gegenüberliegenden Seite des Scheibenaufnahmespaltes erstreckt.

2. Softtop nach Anspruch 1, wobei das Haltelement (4) so ausgebildet ist, dass es eine Klemmwirkung zwischen der ersten und der zweiten Seite des Scheibenaufnahmespaltes auf eine eingesetzte Scheibe (5) ausüben kann.

3. Softtop nach einem der vorstehenden Ansprüche, **dadurch gekennzeichnet, dass** das Haltelement (4) einteilig ausgeführt ist.

4. Softtop nach einem der vorstehenden Ansprüche, **dadurch gekennzeichnet, dass** das Haltelement (4) aus einem flexiblen Material, insbesondere einem flexiblen und elastischen Thermoplast oder einem Elastomer, ausgeführt ist.

5. Softtop nach einem der vorstehenden Ansprüche, **dadurch gekennzeichnet, dass** das der Scheibenaufnahmespalt umlaufend geschlossen ausgebildet ist.

6. Softtop nach dem vorstehenden Anspruch, **dadurch gekennzeichnet, dass** das der Scheibenaufnahmespalt in seinem umlaufenden Umfang im Verhältnis zur einzusetzenden Scheibe (5) ein Untermaß aufweist.

7. Softtop nach einem der vorstehenden Ansprüche, **dadurch gekennzeichnet, dass** das Haltelement (4) eine Verbindungsvorrichtung (10) zum Verbinden mit einem Himmel aufweist.

8. Softtop nach einem der zwei vorstehenden Ansprüche, **dadurch gekennzeichnet, dass** die Verbindungsvorrichtung (10) durch einen lippenförmigen Fortsatz des Halteelements (4) gebildet ist.

9. Softtop nach einem der vorstehenden Ansprüche, **dadurch gekennzeichnet, dass** das Einlegeelement (3) umlaufend ausgebildet ist und in der Form seines Umfangs der Form des Umfangs der einzusetzenden Scheibe (5) entspricht.

10. Softtop nach einem der vorstehenden Ansprüche, **dadurch gekennzeichnet, dass** an einer zum Scheibenaufnahmespalt zugewandten Seite der Tasche (2) eine Dichtung (6) vorgesehen ist.

11. Softtop nach dem vorstehenden Anspruch, **dadurch gekennzeichnet, dass** sich die Dichtung (6) zumindest in den Bereich der Umbiegung des Dachelements (1) erstreckt.

12. Softtop nach einem der vorstehenden Ansprüche, **dadurch gekennzeichnet, dass** der Scheibenaufnahmespalt ein- oder beidseitig Klebemittel (7) aufweist.

13. Softtop nach einem der vorstehenden Ansprüche beinhaltend eine zumindest teilweise transparente Scheibe (5) aufgenommen im Scheibenaufnahmespalt.

14. Verfahren zur Verbindung eines flexiblen Dachelementes mit einer Scheibe, wobei diese Verbindung auswechselbar ausgebildet wird und wobei ein flexibles Dachelement mit einer Aussparung oder einem Rand und ein ein Einlegeelement bereitgestellt und das flexible Dachelement unter Ausbildung einer Tasche, in der das Einlegeelement zu liegen kommt, umgestülpt und die Scheibe auf dem umgeschlagenen Abschnitt der Tasche auf dem flexiblem Dachelement platziert wird und ein Halteelement über die Scheibe und das Einlegeelement mit dazwischen befindlichem flexiblem Dachelement aufgestülpt wird, so das es sich in die Tasche erstreckt.

15. Verfahren zum Auswechseln einer auswechselbaren Scheibe in einem flexiblen Dachelement mit Tasche und Einlegeelement sowie Halteelement durch Entfernen des Halteelementes und anschließendem Trennen der Scheibe vom flexiblen Dachelement und platzieren einer zweiten Scheibe auf dem umgeschlagenen Abschnitt der Tasche auf dem flexiblem Dachelement und aufstülpen des Halteelementes oder eines anderen Halteelements über die Scheibe und das Einlegeelement mit dazwischen befindlichem flexiblem Dachelement, so das sich das Halteelement in die Tasche erstreckt.
